# EUROPEAN PATENT APPLICATION

(11) **EP 3 236 065 A1**
(43) Date of publication of application: **25.10.2017**
(21) Application number: 16166013.9
(22) Date of filing: 19.04.2016
(51) Int. Cl.: F03D 80/60, H02K 9/02

(54) **WIND TURBINE AND METHOD FOR GUIDING COOLING AIR TO AN ELECTRIC MACHINE**

(71) Applicant: Siemens Aktiengesellschaft, 80333 München (DE)
(72) Inventor: Soerensen, Peter Hessellund, 8740 Brædstrup (DK)

(57) **Abstract**

It is described a wind turbine (100), comprising a nacelle (101) and an electric machine (130), wherein the electric machine (130) is arranged within the nacelle (101). Furthermore, the wind turbine comprises a guiding structure (113, 150) having at least one aperture (180, 280) for enabling air to stream from an environment (140) outside of the nacelle (101) into the nacelle (101), wherein the guiding structure (113, 150) is configured for i) guiding the air from the at least one aperture (180, 280) to the electric machine (130), and for ii) cooling the electric machine (130) with the air. Furthermore, the wind turbine comprises at least one air filter (181, 281) which is coupled to the aperture (180, 280), wherein the air filter (181, 281) is configured for filtering the air from the environment (140).

## Description

### Field of invention

The present invention relates to the field of wind turbines. In particular, the present invention relates to cooling an electric machine of a wind turbine. More in particular, the present invention relates to a wind turbine and a method for guiding air to the electric machine in order to cool the electric machine.

### Art Background

It is difficult to supply cooling air to an electric machine, such as a generator within a wind turbine, and causes typically serious challenges. Cool air is available in an environment around the wind turbine, however it is mandatory that the cooling air is clean and dry. Otherwise the wind turbine may be seriously damaged by applying dirty and wet air from the environment.

Conventionally, a known solution to the problem described above is the use of bypass air ducts. These air ducts are for example arranged between a drive end (where e.g. rotor blades are arranged) and a non-drive end (where e.g. stator plates are arranged) of a generator.

However, the air in the bypass ducts will be heated very fast and has to be cooled additionally. Also, these ducts require additional production costs. As a result, the described conventional solution is neither very energy-efficient nor cost-efficient.

EP 2615299 A1 describes a tower head of a wind energy plant having an outer rotor generator which, without the interposition of a transmission, is driven by the rotor of the wind energy plant. The wind energy plant further comprises devices for channeling a cooling medium flow which extracts waste heat from the generator. A stator stack of the generator has one or more passages which conduct the cooling medium flow through the stator stack.

There may be a need for providing a wind turbine and a method for supplying an electric machine of a wind turbine with cooling air in an efficient and reliable manner.

### Summary of the Invention

This need may be met by the subject matter according to the independent claims. Advantageous embodiments of the present invention are described by the dependent claims.

According to a first aspect of the invention there is provided a wind turbine comprising a nacelle and an electric machine, wherein the electric machine is arranged within the nacelle. Furthermore, the wind turbine comprises a guiding structure having at least one aperture for enabling air to stream from an environment outside of the nacelle into the nacelle, wherein the guiding structure is configured for i) guiding the air from the at least one aperture to the electric machine, and for ii) cooling the electric machine with the air. Furthermore, the wind turbine comprises at least one air filter which is coupled to the aperture, wherein the air filter is configured for filtering the air from the environment.

The described wind turbine is based on the idea that an electric machine of a wind turbine may be cooled by using cool air from the environment around the wind turbine. Hereby, the cool air may be guided from the environment through an aperture of the wind turbine into the nacelle. The cool air is further guided from the aperture through a guiding structure to the electric machine of the wind turbine in order to cool the electric machine with the cool air. Because air in the environment of a wind turbine is generally wet and/or dirty, it has been found that an air filter may be arranged at the aperture in order to provide only dry and clean air to the electric machine. The described wind turbine is further based on the insight that more or less no additional process costs or efforts may have to be spend in order to provide the guiding structure. Instead, already existing structures such as a spinner, a hub, a shaft and/or a cavity in the nacelle of the wind turbine may be applied as the guiding structure and/or as a manifold in order to guide cooling air to the electric machine. In summary, the described wind turbine may provide the advantage that the electric machine of a wind turbine may be cooled in an efficient and reliable manner without additional production costs and efforts. Furthermore, the need of additional bypass air ducts may be eliminated. The air in these ducts may be heated, which is energetically inefficient. Furthermore, these ducts produce additional production costs and efforts.

According to another aspect of the invention there is provided a method for supplying air from an environment to an electric machine of a wind turbine, wherein the wind turbine comprises a nacelle and the electric machine is arranged within the nacelle. The method comprises the steps of i) enabling the air to stream from the environment outside of the nacelle through at least one aperture into the nacelle, ii) filtering the air before the air enters the nacelle, iii) guiding the air from the at least one aperture to the electric machine through a guiding structure, and iv) cooling the electric machine with the air.

The described method is based on the same idea as the wind turbine described above and may provide the same advantageous effects. The described method may further be performed by the wind turbine described above.

In the context of the present application, the term "aperture" may particularly denote an opening in a structure, through which a fluid may pass. For example, an aperture may be an opening in a spinner and/or in a housing of a nacelle of a wind turbine. The aperture may be enabled to allow a fluid such as air from an environment to pass through the aperture into the nacelle. This may be a passive process based on diffusion of the air. This may as well be an active process based on a fan which transports air through the aperture into the nacelle. In its most basic form, the aperture may be configured as a hole in a spinner and/or in the housing of a nacelle. In a more complex form, the aperture may have a specific geometrical shape and may be coupled to a filter and/or fan.

In the context of the present application, the term "guiding structure" may particularly denote a structure which is suitable for guiding air in specific direction. In its most basic form, the guiding structure may be configured as a channel through which air flows. The guiding structure may for example be configured as a channel or a cavity in the spinner of a wind turbine. In this manner, air may enter the guiding structure through an aperture and then the air may be guided to the electric machine of the wind turbine. The guiding structure may also be configured as a channel or a cavity in a hollow shaft of the generator of the wind turbine. In this manner, air may be guided through the channel or the cavity in order to be guided to the electric machine of the wind turbine. The guiding structure may be also configured as a cavity in a housing of the nacelle. For example, the housing may comprise an aperture, and air may enter through the aperture into the housing. The cavity in the nacelle may be configured as a guiding structure for guiding the air directly to the electric machine of the wind turbine. The air may be guided as well around the shaft of the electric machine and/or may be guided in a cavity around the shaft. Furthermore, the guiding structure may be configured as a combination of the above identified examples. For example, the guiding structure may be arranged partially in the spinner and partially in the shaft of the generator. These two parts of the guiding structure may be interconnected. For example, the guiding structure part of the shaft may be connected to the guiding structure part of the spinner. As a result, air may be guided through the guiding structure part of the shaft, and then through the guiding structure part of the spinner.

In the context of the present application, the term "air filter" may particularly denote any device which is suitable for filtering air. The air filter may be composed of fibrous materials which remove solid particulates such as dust, pollen, mould, and bacteria from the air. The air filter may also be configured as a chemical air filter consisting of an absorbent or catalyst for the removal of airborne molecular contaminants such as volatile organic compounds or ozone.

According to an embodiment of the invention, the electric machine is a generator, in particular a direct drive generator. This may provide the advantage that the described wind turbine with its advantageous effects can be realized by employing well known and approved process technologies.

The electric machine may be configured as a generator with a gearbox. The electric machine may as well be configured as a generator without a gear box, i.e. a direct drive generator. In the case of a gearbox generator, the generator may be arranged at a position in the nacelle, which position is in a distance from the hub and located behind the position, where a tower is arranged at the nacelle. In contrast to this, in the case of a direct drive generator, the generator may be arranged directly behind the hub at a position in the nacelle, which position is between the hub and the position where the tower is arranged to the nacelle. The direct drive generator may comprise a shaft which is coupled to the hub. The shaft is further coupled to a rotor which is arranged around a stator. The shaft may transfers the rotation energy from the hub to the rotor which then rotates around the stator. In this embodiment, the generator is arranged very close to the hub and cool air may be directly provided to the generator. Thereby, long streaming distances for the air may be avoided. The air may in this case be heated to a lower extent in comparison to a long distance channel, wherein the air may stream for a longer distance and becomes heated to a higher extent. In summary, in the case of a direct drive generator, the hollow shaft of the direct drive generator may be used as an already existing guiding structure.

According to a further embodiment of the invention, the wind turbine further comprises a hub which is coupled to the nacelle, and a spinner. The spinner is arranged at the hub. The spinner forms a spinner cavity such that the spinner forms at least a part of the guiding structure. The spinner cavity is configured for guiding the air through the spinner to the electric machine. This may provide the advantage that the spinner may be applied as a manifold for guiding air to the electric machine of the wind turbine in an efficient and reliable manner without any additional efforts or production costs.

The spinner may be configured as a cover plate which may be attached to the hub, e.g. with screws. The spinner may be made of plastic such as fiberglass or carbon-reinforced plastic and the hub may be made of steel. The spinner may as well be configured for surrounding at least partially the surface of the hub. In this manner a part or the whole surface of the hub may be covered by the spinner. The spinner may comprise additional openings such that rotor blades, which may be attached to the hub, may extent through the openings of the spinner. The spinner may comprise two parts. The first part may be configured as a cover plate arranged at the hub and the second part may be configured for surrounding at least partially the surface of the hub. These two parts may be attached to each other. Also in this example, the spinner may be attached to the hub e.g. with screws. The cavity of the spinner may be formed between the first part and the second part. Hence, the first part and the second part are arranged at least partially spaced apart from each other. The cavity and/or the channel may be connected to a housing of the electric machine or directly to interior parts of the electric machine.

According to a further embodiment of the invention, the spinner comprises an outer layer (e.g. the above described first or second part) which separates the spinner cavity from the environment. This may provide the advantage that a cavity may be formed without any additional production costs or efforts.

According to a further embodiment of the invention, the at least one aperture is formed in the outer layer for enabling the air to stream into the spinner cavity. This may provide the advantage that in a cost-efficient manner, a robust transport of air into the nacelle of the wind turbine is provided.

There may be one single aperture arranged in the outer layer, in particular in the outer layer at the center of the spinner. There may as well be arranged a plurality of apertures in the outer layer. An air filter may be arranged at or within the aperture. When the spinner rotates due to a rotation of the hub and blades which are attached to the hub, the air filter may then also rotate.

According to a further embodiment of the invention, the spinner comprises an inner layer, which is coupled to the hub and/or the nacelle, wherein the spinner cavity is formed between the outer layer and the inner layer. This may also provide the advantage that a cavity may be formed without any additional production costs or efforts.

The outer layer and the inner layer of the spinner may form the spinner cavity in between. Thus, no additional materials may be needed in order to form the spinner cavity for guiding cooling air. The inner layer may be configured as a part of the spinner and cover at least partially a surface of the hub. The inner layer may also be attached to the surface of the hub. The inner layer may as well be configured as a part of the hub. In this example, the outer layer may be configured as a cover plate for covering a surface of the hub, and the surface of the hub may be configured as the inner layer. The spinner cavity may then be formed by the outer layer being a part of the spinner and the inner layer being a part of the hub.

According to a further embodiment of the invention, the inner layer has a spinner hole for guiding air from the hub into the spinner cavity. This may provide the advantage that the described wind turbine is made more flexible. This is because a large variety of different directions may be provided to the cooling air in order to be guided through the wind turbine.

There may be one spinner hole arranged in the inner layer being part of the spinner and/or being part of the hub. The spinner hole may be positioned at the center of the inner layer. There may as well be a plurality of spinner holes arranged in the inner layer, in particular there may be between 1 and 20 spinner holes arranged in the inner layer. The spinner holes may be small in diameter, in particular in a range between 0.5 and 1 m² (square meter). It may be advantageous to provide a low streaming velocity to the cooling air, when the air is guided through the spinner hole. Such a low velocity may be achieved by providing spinner holes with small diameters.

In the case, that the guiding structure comprises the spinner cavity and e.g. a cavity in the shaft of a generator, then both cavities may be connected via the spinner hole. In this manner, the described wind turbine may be very flexible, because the cooling air may be guided through the spinner cavity and/or through the shaft cavity, before the cooling air is guided only through the spinner cavity.

According to a further embodiment of the invention, the at least one aperture is formed in a housing of the nacelle for enabling the air to stream into the nacelle. This may provide the advantage that in a cost-efficient manner, a robust transport of air into the nacelle of the wind turbine is provided.

There may be one single aperture arranged in the housing, in particular at the bottom of the housing. There may as well be arranged a plurality of apertures in the housing. There may be a first aperture in the outer layer of the spinner and there may be a second aperture in the housing of the nacelle. Furthermore, there may be a plurality of first apertures in the outer layer and there may be a plurality of second apertures in the housing.

According to a further embodiment of the invention, the wind turbine further comprises a tube connecting the at least one aperture in the housing of the nacelle with the electric machine, wherein the tube comprises a tube cavity such that the tube forms at least part of the guiding structure, and wherein the tube cavity is configured for guiding the air through the tube to the electric machine. This may provide the advantage that the cooling is more efficient, because cool air is only transported over a very short distance and directly to the electric machine.

The at least one aperture may be formed at a top of the housing of the nacelle. The at least one aperture may also be formed at a sidewall of the housing of the nacelle. Hereby, the at least one aperture may be formed at a location of the housing of the nacelle which location has a short distance to the electric machine. Cool air from the environment may be guided through the aperture and through the tube cavity to a hole in the housing of the electric machine in order to cool the electric machine. If the electric machine is a generator, the air may be guided directly to the rotor or stator of the generator. The cool air may also be guided to end windings of the generator for example. A forth filter (which may also function as a fan) may be arranged in the tube cavity in order to transport and/or to filter the cool air.

According to a further embodiment of the invention, the wind turbine further comprises a shaft, in particular a hollow shaft, having a shaft cavity such that the shaft forms at least a part of the guiding structure, wherein the shaft cavity is configured for guiding the air from the at least one aperture in a direction to the electric machine. This may provide the advantage that the shaft may be applied as a manifold for guiding air to an electric machine of the wind turbine in an efficient and reliable manner without any additional efforts or production costs.

As has already been described above, the shaft may be a hollow shaft which is connected between the hub and a rotor, wherein the rotor may be configured to rotate around a stator. The shaft cavity may be formed in the cavity of the hollow shaft. The shaft cavity may as well be formed as a cavity around the shaft. In this example, the shaft be arranged in a channel and the region around the shaft may be configured as the shaft cavity for guiding cooling air. Cooling air may be guided through the shaft cavity and then the air may be guided into the hub. Cooling air may further be guided into the spinner cavity, e.g. through a spinner hole.

Air from the environment around the wind turbine may be guided through the at least one aperture in the housing of the nacelle into the nacelle and then into the shaft cavity. Hereby, the air may be guided based on diffusion and/or there may be a further guiding structure arranged between the aperture and the shaft cavity. The further guiding structure may be configured as a channel or as a cavity. The further guiding structure may be coupled to a further filter and/or fan.

According to a further embodiment of the invention, the hub comprises at least one hub hole for guiding the air from the nacelle to the electric machine, and/or for guiding the air to the spinner cavity. This may provide the advantage that the described wind turbine is made more flexible.

The hub hole may be arranged in a sidewall of the hub. There may as well be a plurality of hub holes arranged in the sidewalls of the hub, in particular there may be between 1 and 20 hub holes, more in particular three hub holes, arranged in the sidewalls of the hub. The hub holes may be small in diameter, in particular in a range between 0.5 and 1 m² (square meters) It may be advantageous to provide a low streaming velocity to the cooling air when being guided through the hub hole. Such a low velocity may be achieved by providing hub holes with small diameters. The hub hole may be coupled with a spinner hole and/or a hole in a housing of the electric machine. The same holds true for a plurality of respective holes.

In the case, that the guiding structure comprises the spinner cavity and the shaft cavity, both cavities may be connected via the spinner hole and via the hub hole. In this manner, the described wind turbine may be very flexible, because the cooling air may be guided through the spinner cavity and/or through the shaft cavity, before the cooling air is guided only through the spinner cavity.

In another example, cooling air may be guided through the shaft cavity, and then through the hub hole and a hole in the housing of the electric machine directly to the electric machine. In this example, cooling air from the aperture in the housing of the nacelle may be guided directly through the shaft cavity to the electric machine and is not guided via the spinner cavity. In this manner, the described wind turbine may be more flexible.

According to a further embodiment of the invention, the hub comprises a hub cavity such that the hub forms at least a part of the guiding structure, and wherein the hub cavity is configured for guiding the air through the hub, in particular through the hub cavity and the hub hole, to the electric machine. This may provide the advantage that the cooling is more efficient, because cool air is only transported over a very short distance and directly to the electric machine.

Cooling air may be guided through the shaft cavity, and then into a hub cavity, e.g. through a first hub hole. Hereby, the hub cavity may be an inner volume of the hub. From the hub cavity, cooling air may be guided through a second hub hole and a hole in the housing of the electric machine directly to the electric machine. The cool air may also cool end windings of the electric machine. In this example, cooling air from the aperture in the housing of the nacelle may be guided directly through the shaft cavity to the electric machine and is not guided via the spinner cavity. In this manner, the described wind turbine may be more flexible and efficient.

According to a further embodiment of the invention, the air filter is a mist eliminator, and/or a first fan. This may provide the advantage that a long lifetime of the electric machine is ensured.

Wet air may damage the electric machine on a long timescale. Thus, the mist eliminator may be configured to provide only dry air to the electric machine. Particulates in dirty air may as well damage the electric machine. Hence, a filter may ensure that only clean air is provided to the electric machine.

According to a further embodiment of the invention, a second filter and/or a second fan are arranged in the nacelle for filtering the air before cooling the electric machine. This may also provide the advantage that a long lifetime of the electric machine may be ensured and that the efficiency of the cooling is maximized.

Providing a further step of cleaning may make the air even cleaner. Hence, the efficiency of cooling may be improved. As wet air and dirty air may damage the electric machine, the lifetime of the machine may be enlarged, when providing additional filters.

Fans may be arranged between the spinner cavity and the electric machine. In this manner, the air may be efficiently guided from the aperture through the spinner cavity to the electric machine. Air may as well be efficiently guided from the aperture in the nacelle through the shaft and then through the spinner cavity to the electric machine. Furthermore, further air from a cavity in the housing of the nacelle may be guided directly to the electric machine by second filters.

According to a further embodiment of the invention, the wind turbine further comprises an outlet structure, in particular a channel, for enabling the air to stream out of the nacelle after the air has cooled the electric machine. This may provide the advantage that warm air is efficiently removed such that no warm air may remain in the nacelle. Such warm air may heat the nacelle and/or the cool air.

The outlet structure may be configured as a channel inside of the nacelle. The outlet structure may be connected between the electric machine and an aperture in the housing of the nacelle. In this manner, warm air may be directly guided from the electric machine out of the nacelle. It may be crucial to remove warm air very quickly from the nacelle. This is because the nacelle and/or the cool air may be heated by warm air which may remain in the nacelle.

A third filter and/or fan may be established in the channel of the outlet structure. In this manner, the warm air may be efficiently transported out of the nacelle. Furthermore, the warm air may be contaminated, e.g. with oil from the electric machine and there may be a need to filter the warm air with the third air filter, before the air is transported out of the nacelle.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a schematic view of a wind turbine according to an exemplary embodiment of the invention.
Figure 2 shows a schematic view of a wind turbine according to a further exemplary embodiment of the invention.
Figure 3 shows a schematic view of a wind turbine according to a further exemplary embodiment of the invention.
Figure 4 shows a schematic view of a hub of a wind turbine according to an exemplary embodiment of the invention.
Figure 5 shows a top view of a hub of a wind turbine according to a further exemplary embodiment of the invention.
Figure 6 shows a schematic view of a wind turbine according to a further exemplary embodiment of the invention.

In different drawings, similar or identical elements are provided with the same reference signs.

Before, referring to the drawings, an exemplary embodiment will be described in further detail and some basic considerations will be summarized based on which exemplary embodiments of the invention have been developed.

According to an exemplary embodiment of the invention, cooling air is supplied to the drive end of a direct drive generator of a wind turbine. A spinner of the wind turbine is used as a manifold for supplying the drive end cooling air to the generator. This can be done by using a shaft as air supply to the spinner or using only the spinner.

### Detailed Description

The illustration in the drawing is schematically. It is noted that in different figures, similar or identical elements or features are provided with the same reference signs.

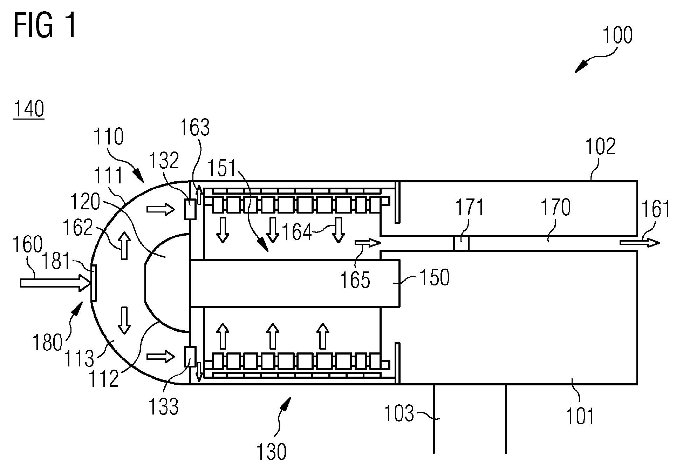

Figure 1 shows a schematic view of a wind turbine 100 according to an exemplary embodiment of the invention. The wind turbine 100, which is situated in an environment 140, comprises a nacelle 101 with a housing 102 and an electric machine 130, wherein the electric machine 130 is arranged within the nacelle 101. Hereby, the electric machine 130 is configured as a direct drive generator. The generator 130 comprises a shaft 151 configured as a hollow shaft with a cavity 150 in between. The nacelle 101 is further arranged on top of a tower 103.

The wind turbine 100 further comprises a hub 120, which is coupled to the nacelle 101, and a spinner 110, wherein the spinner 110 is arranged at the hub 120. The spinner 110 comprises an outer layer 111 which separates the spinner cavity 113 from the environment 140 and an inner layer 112 which is coupled to the hub 120. Thereby, a spinner cavity 113 is formed between the outer layer 111 and the inner layer 112. The spinner cavity 113 is formed such that the spinner 110 forms at least a part of a guiding structure 113. The spinner cavity 113 is hereby configured for guiding the air in a direction 162 through the spinner 110 to the electric machine 130. Furthermore, at least one aperture 180 is formed in the outer layer 111 for enabling the air from the environment 140 to stream into the spinner cavity 113.

The guiding structure 113 is coupled to the aperture 180 for enabling air 160 to stream from the environment 140 outside of the nacelle 101 into the nacelle 101, wherein the guiding structure 113 is configured for i) guiding the air from the at least one aperture 180 to the generator 130, and for ii) cooling the generator 130 with the air. The aperture 180 is arranged at the center of the spinner 110. Hereby, the center is arranged, where the axis of rotation of the shaft 151 of the generator 130 intersects with the outer layer 111. The air is guided from the aperture 180 through the spinner cavity 113 in a first direction to a top part of the generator 130 and in a second direction to a bottom part of the generator 130.

The wind turbine 100 comprises at least one air filter 181, which is coupled to the aperture 180, wherein the air filter 181 is configured for filtering the air from the environment 140. The air filter 181 is configured as a mist eliminator. A second filter and a second fan 132, 133 are arranged in the nacelle 101 for filtering the air before cooling the generator 130. The cool air is guided from the spinner cavity 113 through the second filter/fan 132, 133 into a housing of the generator 130. The outer layer 111 and the inner layer 112 terminate at the generator 130 and thereby define the dimension of the spinner cavity 113. At the termination of the spinner cavity, the second filter/fan 132, 133 is arranged, such that only clean air 163 is supplied to the generator 113.

An outlet structure 170 is configured as a channel for enabling supplying air 164 and warm air 165 to stream out of the nacelle 101, after the air has cooled the generator 130. For this purpose, the outlet structure 170 is provided with a third filter/fan 171 for transporting warm air 165 in a direction out 161 of the nacelle 101.

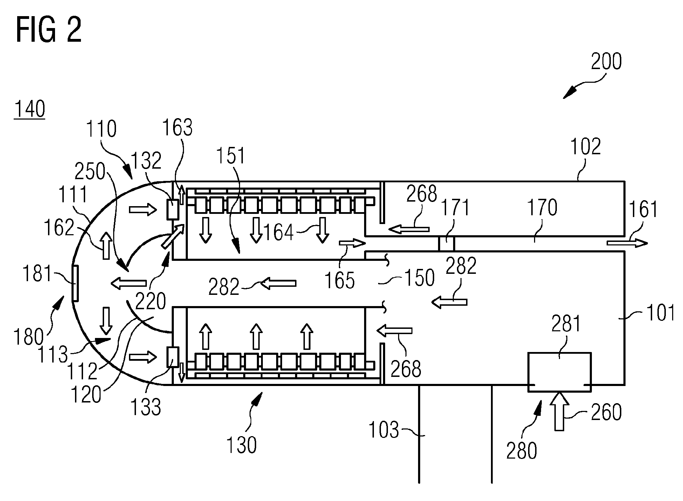

Figure 2 shows a schematic view of a wind turbine 200 according to a further exemplary embodiment of the invention. At least one aperture 280 is formed in the housing 102 of the nacelle 101 for enabling air 260 to stream through an air filter 281 into the nacelle 101. The air inside the nacelle 282 is then guided to the shaft 151 of the generator 130. The shaft 151 is configured as a hollow shaft, having a shaft cavity 150. The shaft cavity is configured such that the shaft 151 forms at least a part of the guiding structure 150.

The guiding structure 150 is coupled to the at least one aperture 280 for enabling air 260 to stream from the environment 140 outside of the nacelle 101 into the nacelle 101. The guiding structure 150 is configured for i) guiding the air from the at least one aperture 280 to the generator 130, and for ii) cooling the generator 130 with the air. Hereby, the shaft cavity 150 is configured for guiding cool air in a direction 282 from the at least one aperture 280 in a direction 282 parallel to the axis of rotation of the shaft to the generator 130. The axis of rotation of the shaft 150 is hereby perpendicular to the direction of the force of gravity.

The hub 120 comprises at least one hub hole 220 for guiding the air in a direction 282 from the nacelle 101 to the generator 130. The cool air can also be guided through a spinner hole 250 into the spinner cavity 113. Then, the air is guided in a direction 162 to the generator 130 as described for Figure 1 above. The air can as well be guided directly from the hub 120 through a hub hole 220 into the housing of the generator 130.

Additionally, further cool air 268 from the environment 140 of the wind turbine 200 is guided through the aperture 280 into a cavity in the housing 102 of the nacelle 101. The further air 268 is guided directly into the housing of the generator 130.

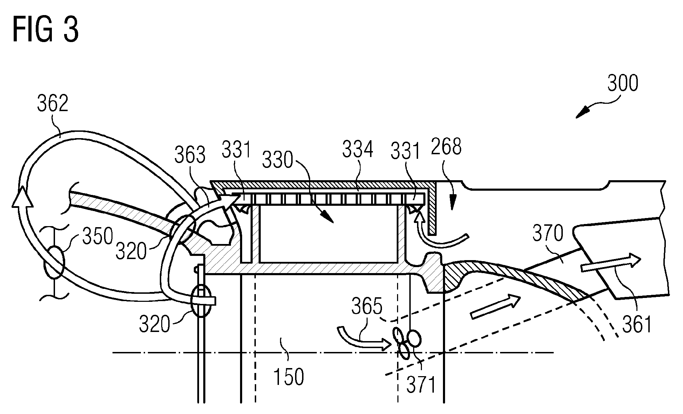

Figure 3 shows a schematic view of a wind turbine 300 according to a further exemplary embodiment of the invention. Two different guiding directions 362, 363 for the cooling air are shown. In a hub direction 363, the cool air leaves the shaft cavity 150 and is guided through a first hub hole 320 into a hub cavity of the hub 120. Then, the cool air is guided from the hub cavity through a second hub hole 320 directly to the generator 330. In a spinner direction 362, cool air leaves the shaft cavity 150 and is guided through the hub cavity and through a spinner hole 350 to the spinner cavity 113 and then to the generator 330. Hereby, the inner layer 111 of the spinner cavity 113 comprises the spinner hole 350 for guiding air from the hub 120 into the spinner cavity 113 and to the generator 330. The cool air is guided to first end windings 331 of the generator 330. The first end windings 331 are part of the windings of the generator 330 and protrude at a first sidewall of the generator 330. Then, the cool air is guided through an air gap 334 of the generator 330. Second end windings 331 are also part of the windings of the generator 330 and protrude at a second sidewall of the generator 330. Hereby, the second sidewall is arranged at a position of the generator 330 opposite to the first sidewall. The second end windings 331 are either also cooled by said cool air or by cool air from another direction 268. After cooling the generator 330, warm air is transported in a direction 365 by a third fan 371 into an outlet structure 370. The outlet structure 370 is configured as a channel for guiding the warm air in a direction 361 out of the nacelle 101.

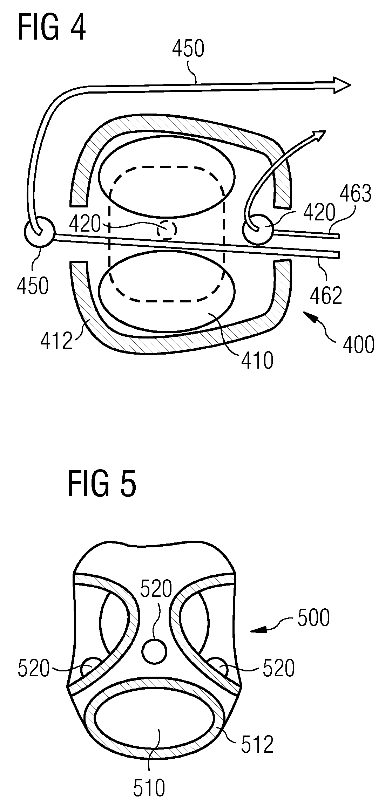

Figure 4 shows a schematic view of a hub 400 according to a further exemplary embodiment of the invention. The hub 400 comprises sidewalls 412, which define a hub cavity in between, and spaces 410 configured for attaching rotor blades. Cool air is guided in a hub direction 463 through a hub hole 420 and to the generator 130. Furthermore, cool air is guided in a spinner direction 462 through one of the hub holes 420. Then the air is guided through a hub cavity of the hub 400 and leaves the hub 400 through a spinner hole 450 into a spinner cavity 113. Then the air guided to the generator 130.

Figure 5 shows a top view of a hub 500 according to a further exemplary embodiment of the invention. The hub 500 comprises sidewalls 512 and spaces 510 configured for attaching rotor blades. Furthermore, the hub 500 comprises at least one hub hole 520, in particular three hub holes 520, configured for enabling air to be guided through the hub hole 520 into the hub 500, and/or to be guided to the generator 130.

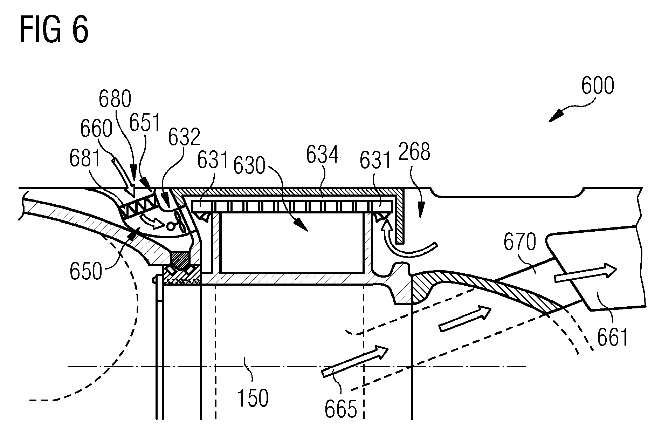

Figure 6 shows a wind turbine 600 according to another exemplary embodiment. The wind turbine 600 comprises a tube 651 connecting the at least one aperture 680 in the housing of the nacelle 101 with the electric machine 630, wherein the tube comprises a tube cavity 650 such that the tube 651 forms at least part of the guiding structure 150, 650, and wherein the tube cavity 650 is configured for guiding air 660 through the tube 651 to the electric machine 630 being a generator. The at least one aperture 680 is arranged on top of the housing of the nacelle 101 within a short distance to the electric machine 630. An air filter 681 is arranged at or in the aperture 680. Furthermore, a forth filter/fan 632 is arranged in the tube cavity 650 in order to transport and/or filter the cool air 660 to the generator 630. The cool air is guided to first end windings 631 of the generator 630. The end windings 631 are part of the windings of the generator 630 and protrude at a first sidewall of the generator 630. Then, the cool air is guided through an air gap 634 of the generator 630. Second end windings 631 are also part of the windings of the generator 630 and protrude at a second sidewall of the generator 630. Hereby, the second sidewall is arranged at the opposite site of the generator 630 compared with the first sidewall. The second end windings 631 are either also cooled by said cooling air or by cooling air from another direction 268. After cooling the electric machine 630, warm air is transported in a direction 665 into an outlet structure 670. The outlet structure 670 is configured as a channel for guiding the warm air in a direction 661 out of the nacelle 101.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A wind turbine (100), comprising
a nacelle (101),
an electric machine (130),
wherein the electric machine (130) is arranged within the nacelle (101),
a guiding structure (113, 150) having at least one aperture (180, 280) for enabling air to stream from an environment (140) outside of the nacelle (101) into the nacelle (101),
wherein the guiding structure (113, 150) is configured for guiding the air from the at least one aperture (180, 280) to the electric machine (130), and for
cooling the electric machine (130) with the air, and
at least one air filter (181, 281) which is coupled to the aperture (180, 280), wherein the air filter (181, 281) is configured for filtering the air from the environment (140).

2. The wind turbine (100) as set forth in claim 1, wherein the electric machine (130) is a generator, in particular a direct drive generator.

3. The wind turbine (100) as set forth in any preceding claim, further comprising
a hub (120) which is coupled to the nacelle (101), and
a spinner (110), wherein the spinner (110) is arranged at the hub (120), and wherein the spinner (110) comprises
a spinner cavity (113) such that the spinner (110) forms at least a part of the guiding structure (113), and wherein the spinner cavity (113) is configured for guiding the air through the spinner (110) to the electric machine (130).

4. The wind turbine (100) as set forth in claim 3, wherein the spinner (110) comprises an outer layer (111) which separates the spinner cavity (113) from the environment (140).

5. The wind turbine (100) as set forth in claim 4, wherein the at least one aperture (180) is formed in the outer layer (111) for enabling the air to stream into the spinner cavity (113).

6. The wind turbine (100) as set forth in claim 4 or 5, wherein the spinner (110) comprises an inner layer (112), which is coupled to the hub (120) and/or the nacelle (101), wherein the spinner cavity (113) is formed between the outer layer (111) and the inner layer (112).

7. The wind turbine (100) as set forth in claim 6, wherein the inner layer (112) comprises a spinner hole (250) for guiding air from the hub (120) into the spinner cavity (113).

8. The wind turbine (100) as set forth in any preceding claim, wherein the at least one aperture (280) is formed in a housing (102) of the nacelle (101) for enabling the air to stream into the nacelle (101).

9. The wind turbine (100) as set forth in claim 8, further comprising
a shaft (151), in particular a hollow shaft, having a shaft cavity (150) such that the shaft (151) forms at least a part of the guiding structure (150),
wherein the shaft cavity (150) is configured for guiding the air from the at least one aperture (280) in a direction to the electric machine (130).

10. The wind turbine (100) as set forth in claim 9, wherein the hub (120) comprises at least one hub hole (220) for guiding the air from the nacelle (101) to the electric machine (130),
and/or for
guiding the air to the spinner cavity (113).

11. The wind turbine (100) as set forth in any preceding claim, wherein the air filter (181, 281) is a mist eliminator, and/or a first fan.

12. The wind turbine (100) as set forth in any preceding claim, wherein a second filter and/or a second fan (132, 133) are arranged in the nacelle (101) for filtering the air before cooling the electric machine (130).

13. The wind turbine (100) as set forth in any preceding claim, further comprising
an outlet structure (170), in particular a channel, for enabling the air to stream out of the nacelle (101) after the air has cooled the electric machine (130).

14. A method for guiding air from an environment (140) to an electric machine (130) of a wind turbine (100), wherein the wind turbine (100) comprises a nacelle (101), and the electric machine (130) is arranged within the nacelle (101), the method comprising:
enabling the air to stream from the environment (140) outside of the nacelle (101) through at least one aperture (180, 280) into the nacelle (101);
filtering the air before the air enters the nacelle (101);
guiding the air from the at least one aperture (180, 280) to the electric machine (130) through a guiding structure (113, 150), and
cooling the electric machine (130) with the air.
